# EUROPEAN PATENT SPECIFICATION

(11) **EP 4 066 521 B1**
(45) Date of publication and mention of the grant of the patent: **11.09.2024**
(21) Application number: 19836470.5
(22) Date of filing: 28.11.2019
(51) Int. Cl.: H04W 4/80, F21S 9/02, H02J 9/02, H05B 47/19, H04W 84/18

(54) **SYSTEM FOR EMERGENCY LIGHT CONTROL OVER MESH NETWORK**
SYSTEM ZUR NOTLICHTSTEUERUNG ÜBER EIN MESH-NETZWERK
SYSTÈME DE COMMANDE DE LUMIÈRE D'URGENCE SUR UN RÉSEAU MAILLÉ

(43) Date of publication of application: 05.10.2022
(73) Proprietor: Wärtsilä SAM Electronics GmbH, 22763 Hamburg (DE)
(72) Inventor: WICHERN, Maximilian, 22763 Hamburg (DE); NOESLER, Patrick, 22763 Hamburg (DE); LUCHOWSKI, Jonas, 22763 Hamburg (DE)
(74) Representative: Boco IP Oy Ab
(86) International application number: PCT/EP2019/082864
(87) International publication number: WO 2021/104628

(56) References cited:
- WO-A1-2019/218014
- WO-A1-2019/218014
- US-A1- 2010 327 766
- US-A1- 2010 327 766

## Description

### TECHNICAL FIELD

The present application generally relates to an emergency light system. The present application further relates to a marine vessel light module apparatus, device and related method.

### BACKGROUND

This section illustrates useful background information without admission of any technique described herein representative of the state of the art.

A generator is the heart of the energy production at a marine vessel. To control and use the generator, engines, engine controls and main switch boards may be utilized. These elements constitute the basic requirement of an electrical system of any kind of marine vessel. However, that does not mean that the marine vessel can run solely on them. There are few other elements and parameters that need to be taken into consideration for the continuous supply of electrical power and also to ensure safety and redundancy.

The main intention of an emergency power system is to furnish immediate, automatic electric power to a limited number of selected vital circuits. The emergency power system may include one or more fuel-driven emergency generators as well as an emergency switch board and a distributed system. Both emergency generator and emergency switch board may be kept above the waterline to minimize danger from flooding. Emergency services may also include navigation, safety and emergency lights.

All these emergency services may be supplied from the emergency switch board. An emergency switch board has distributed panels for all the emergency services onboard. The emergency switch board may be located above the bulkhead deck. This is to ensure that at the time of any emergency such as fire or flooding, the switchboard is not affected and is easily accessible and that any such emergency does not lead to loss of lighting in escape routes and other important navigation control areas.

The marine vessel's emergency electrical system and the safety of the ship and the crew are interwoven. The electrical emergency services, also known as the emergency power system, is the back-bone of safety on the marine vessel. The arrangement and the installation of the emergency services should be so smartly done that no matter what happens to the marine vessel, the emergency system should provide energy and support on the vessel until the situation can be handled.

Thus, the main components of an emergency power system are emergency generator and emergency lights.

"Black out" is a condition considered similar to a "dead ship" condition. It may be a condition under which the main propulsion plant, boilers and auxiliaries are not in operation and also there is no stored energy available to restore them. This is the time for the emergency generator to take over. The emergency generator has its own prime mover and fuel supply.

Emergency lights are of great importance at marine vessel environment. These lighting fixtures must provide an uninterrupted source of lighting in the event of power outage. The source of power for these lighting may consist of accumulator batteries which are continuously charged from the main switch board.

Traditionally in the marine vessel emergency light system an switchover is based on a cabled installation. Such approach increases time to switch on the emergency lights as well as introduces wear of components and may cause device malfunctions. Furthermore, additional functions and operations are complex and cumbersome to add and introduce high costs.

Thus, a solution is needed to enable accurate, easy-to-use, and reliable emergency lights system for marine vessels.

US 2010/0327766 A1 discloses a wireless emergency lighting system in which LED light sources with internal power source are controlled by a wireless input.

WO 2019/218014 A1 discloses an emergency light with a storage for electrical power to be charged by the building power supply and a node that is adapted to form a self-organizing communication network with other nodes.

### SUMMARY

The invention is defined by the subject matter of the independent claims. Advantageous enhancements are subject to the dependent claims.

### BRIEF DESCRIPTION OF THE DRAWINGS

For a more complete understanding of example embodiments of the present invention, reference is now made to the following descriptions taken in connection with the accompanying drawings in which:
Fig. 1 shows a schematic picture of a marine vessel and a system according to an example embodiment of the invention;
Fig. 2 presents an example block diagram of a control apparatus in which various embodiments of the invention may be applied;
Fig. 3 shows a schematic picture of an emergency control model (ECM) and related information flows according to an example embodiment;
Fig. 4 shows a schematic drawing of a system according to an example embodiment of the invention;
Fig. 5 shows a flow chart of a process according to an example embodiment of the invention; and
Fig. 6 presents an example block diagram of a light module apparatus in which various embodiments of the invention may be applied.

### DETAILED DESCRIPTION OF THE DRAWINGS

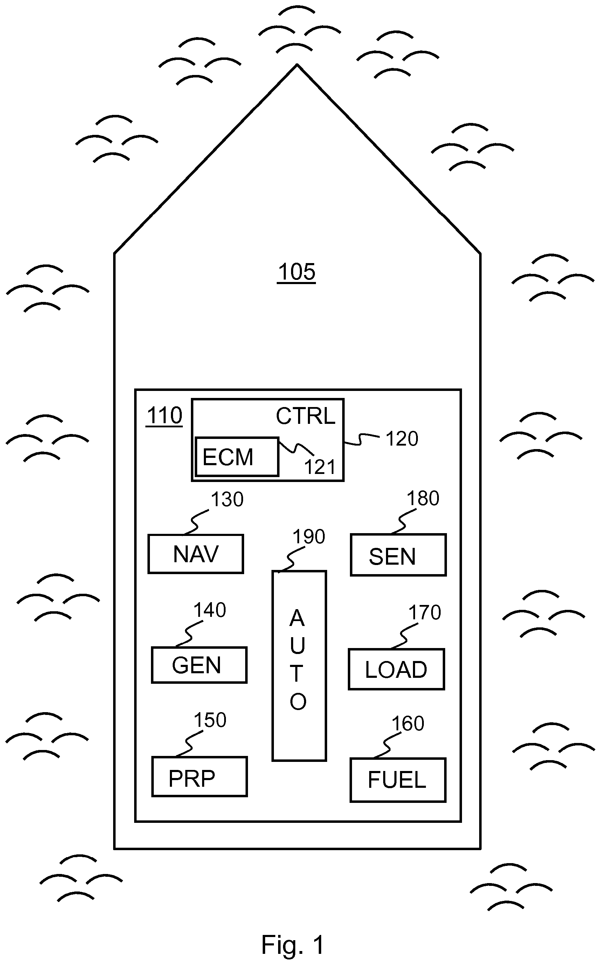

An example embodiment of the present invention and its potential advantages are understood by referring to Figs. 1 through 6 of the drawings. In this document, like reference signs denote like parts or steps.

By allowing an extended exchange of data between more systems, it makes it possible to create a better optimization and utilization of the on-board systems.

Fig. 1 shows a schematic picture of a marine vessel 105 and a marine vessel system 110 according to an example embodiment.

The marine vessel system 110 comprises a control apparatus 120 configured to provide and operate an emergency control model (ECM) 121.

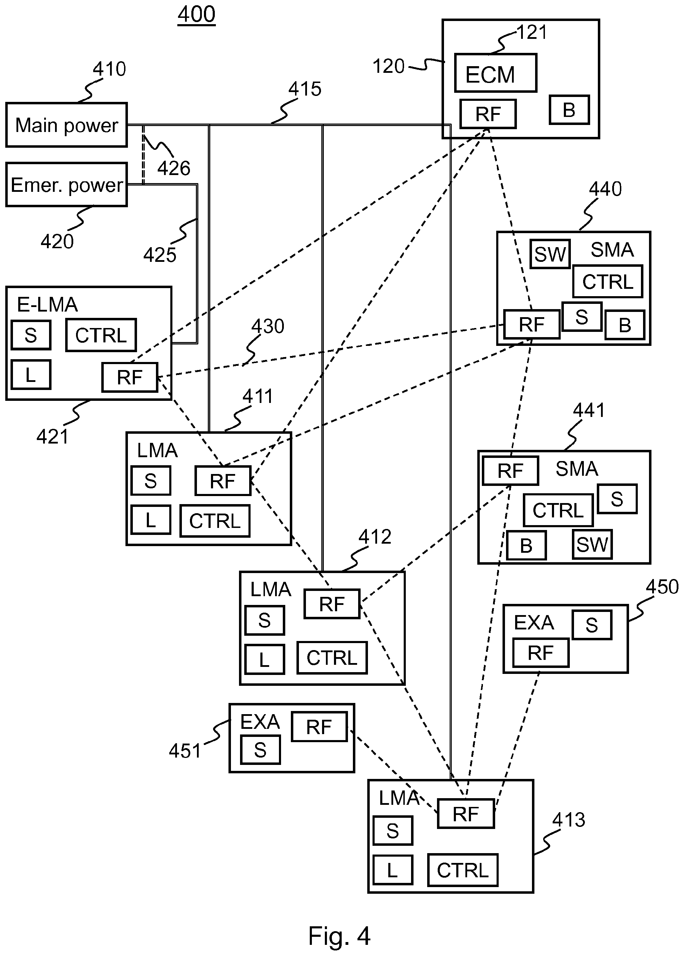

In an embodiment, a task may be generated based on the emergency control model (ECM) 121, wherein the task may relate to emergency activities (light system, maintenance of sub-systems, emergency/backup power supply, gas solutions, heat exchangers, fresh water production, etc.). By establishing an extended interface between the emergency control model (ECM) 121 and other systems like the navigation system 130, automation system 190, power generation system 140, propulsion system 150, fuel system 160, energy load system 170 and sensor system 180, for example, it is possible to automate the activities related to emergency situation. Planning the emergency energy production and consumption and providing an emergency plan determining what and when certain tasks are to be performed and when systems should be ready on standby or switched on/off. The emergency plan generated based on the emergency control model (ECM) 121 can include schedules for various tasks associated with marine vessel system 110. Top priority for optimization may be defined to be safety, and second and third priority can be set by the ship operator (energy efficiency, fuel consumption, speed/time, etc.), for example. The sensor system 180 may comprise any sensor of the emergency light system within different apparatuses (see Fig. 4, for example).

In an embodiment, the energy load system 170 may comprise a plurality of light module apparatuses operationally connected to a main power supply, comprising a communication interface for a mesh network; an emergency light module apparatus operationally connected to an emergency power supply, comprising a communication interface for the mesh network; and wherein in the second operating mode, an emergency signal is configured to be received by the emergency light module apparatus over the mesh network, and to control the emergency light module apparatus based on the emergency signal.

In an embodiment, the power generation system 140 may comprise the main power supply configured to provide power in a first operating mode; and the emergency power supply configured to provide power in a second operating mode.

In an embodiment, the emergency control model (ECM) 121 may be configured to control the emergency light system over a mesh network, via the automation system 190, or directly (not shown in Fig. 1 but see Fig. 4) with the elements involved in the emergency light system.

Propulsion system (PRP) 150 may utilize power source to be selected from at least one of the following: combustion-engine based power source; hybrid power source; and full electric power source.

The emergency control model (ECM) 121 solution will allow different levels of automation within vessels. In first operation mode, emergency control model (ECM) 121 may be configured to provide an emergency plan, which the engineers can use for scheduling their activities. In second operation mode, emergency control model (ECM) 121 may be configured to provide an embedded solution, wherein the sub-systems can notify the operator based on the plan, when to perform certain tasks or be switched on or set to standby. This notification is repeated on the main display in the engine control room or remote-control station. In third operation mode, emergency control model (ECM) 121 may be configured to provide a solution to be fully automated and automatically executing energy voyage plan of the emergency control model (ECM) 121 with merely notification provided to the operator or remote-control station when performing different automated tasks.

In an embodiment, a system 110 for emergency light control over a mesh network is configured to be controlled by an emergency control model (ECM) 121, and comprising: a main power supply configured to provide power in a first operating mode; a plurality of light module apparatuses operationally connected to the main power supply, comprising a communication interface for a mesh network; an emergency power supply configured to provide power in a second operating mode; an emergency light module apparatus operationally connected to the emergency power supply, comprising a communication interface for the mesh network; and wherein in the second operating mode, an emergency signal is configured to be received by the emergency light module apparatus over the mesh network, and to control the emergency light module apparatus based on the emergency signal. Not all elements of the system 110 are needed to carry out the embodiments.

The system 110 is configured to provide emergency light system of the marine vessel 105.

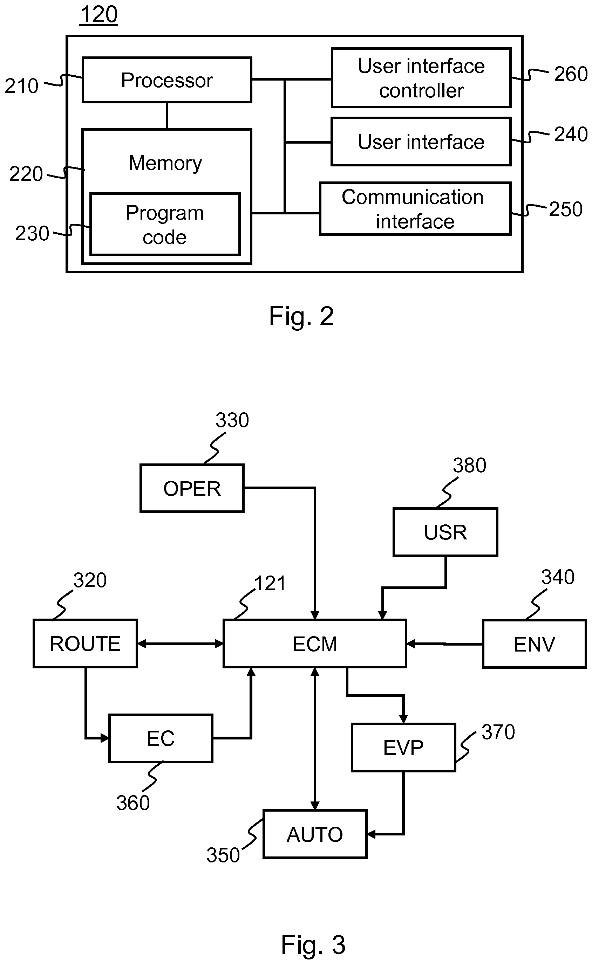

Fig. 2 presents an example block diagram of a control apparatus 120 in which various embodiments of the invention may be applied. The control apparatus 120 is configured to control a system for emergency situation and related activities, such as emergency light control of a marine vessel.

The general structure of the control apparatus 120 comprises a user interface 240, a communication interface 250, a processor 210, and a memory 220 coupled to the processor 210. The control apparatus 120 further comprises software 230 stored in the memory 220 and operable to be loaded into and executed in the processor 210. The software 230 may comprise one or more software modules and can be in the form of a computer program product, such as the emergency control model (ECM) 121 of Fig. 1. The control apparatus 120 may further comprise a user interface controller 260.

The processor 210 may be, e.g., a central processing unit (CPU), a microprocessor, a digital signal processor (DSP), a graphics processing unit, or the like. Fig. 2 shows one processor 210, but the apparatus 120 may comprise a plurality of processors.

The memory 220 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 120 may comprise a plurality of memories. The memory 220 may be constructed as a part of the apparatus 120 or it may be inserted into a slot, port, or the like of the apparatus 120 by a user. The memory 220 may serve the sole purpose of storing data, or it may be constructed as a part of an apparatus serving other purposes, such as processing data. A proprietary application 230, such as computer program code for the emergency control model (ECM) 121, voyage related data, vessel related data, emergency data, seawater data, sensor data or environmental data may be stored to the memory 220.

In an embodiment, the apparatus 120 is configured to perform a computer implemented method for controlling a light module apparatus in a system comprising a main power supply configured to provide power in a first operating mode, a plurality of light modules operationally connected to the main power supply, comprising a communication interface for a mesh network, an emergency power supply configured to provide power in a second operating mode, at least one emergency light module operationally connected to the emergency power supply, comprising a communication interface for the mesh network, configured to receive power from the emergency power supply in the second operating mode, the method comprising: receiving an emergency signal over the mesh network; and controlling a lighting device of the light module apparatus based on the emergency signal.

The user interface controller 260 or the user interface 240 may comprise circuitry for receiving input from a user of the control apparatus 120 (an operator), e.g., via a keyboard, graphical user interface shown on the display of the user interfaces 240 of the control apparatus 120, speech recognition circuitry, or an accessory device, such as a headset, and for providing output to the user via, e.g., a graphical user interface or a loudspeaker.

The communication interface module 250 implements at least part of data transmission. The communication interface module 250 may comprise, e.g., a wireless or a wired interface module. The wireless interface may comprise such as a WLAN, Bluetooth, infrared (IR), radio frequency identification (RF ID), GSM/GPRS, CDMA, WCDMA, LTE (Long Term Evolution) or 5G radio module. The wired interface may comprise such as universal serial bus (USB) or National Marine Electronics Association (NMEA) 0183/2000 standard for example. The communication interface module 250 may be integrated into the control apparatus 120, or into an adapter, card or the like that may be inserted into a suitable slot or port of the control apparatus 120. The communication interface module 250 may support one radio interface technology or a plurality of technologies. The control apparatus 120 may comprise a plurality of communication interface modules 250.

A skilled person appreciates that in addition to the elements shown in Fig. 2, the control apparatus 120 may comprise other elements, such as microphones, extra displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the control apparatus 120 may comprise a disposable or rechargeable battery (not shown) for powering when external power if external power supply is not available.

In an embodiment, the control apparatus 120 comprises speech recognition means. Using these means, a pre-defined phrase may be recognized from the speech and translated into control information for the apparatus 120, for example.

External devices or sub-systems (e.g. elements 130-190 of Fig. 1) may be connected to the control apparatus 120 using communication interface 250 of the apparatus 120 or using a direct connection to the internal bus of the apparatus 120.

Fig. 3 shows a schematic picture of an emergency control model (ECM) 121 and related information flows according to an example embodiment.

There may be some criteria, which should be taken into attention during control and operation of emergency control model (ECM) 121 of a marine vessel.

The ship operators' decisions which input parameters should be used in particular situations may vary based on experience, behaviors or assumptions.

Elements 320-380 may have alternative ways to connect with each other and Fig. 3 only shows one example embodiment. Furthermore, only connections that may relate somehow to emergency control model (ECM) 121 are illustrated. For example, environmental information 340 may also be used for route planning and thus for the route plan information 320 but direct connection between blocks 320 and 340 is not shown for simplifying the Fig. 3. Not all elements 320-380 are necessarily required for the emergency control model (ECM) 121 to operate.

The emergency control model (ECM) 121 can be configured to operate as a stand-alone solution or as an integrated part of the energy management system/voyage management system/power management system of the marine vessel. The emergency control model (ECM) 121 enables automation of the emergency power generation process, energy production and consumption, light control and further enables a higher degree of autonomous operation on board conventional marine vessels and paves the way for energy management for autonomous marine vessels.

In an embodiment, the emergency control model (ECM) 121 may be interfaced with the navigation system, automation system, power management system and sub-systems like light control, engines and generators, as shown in Fig. 1, for example. The emergency control model (ECM) 121 may further be configured to receive and manage information about the health status of sub-systems directly or through the power management and automation systems. The emergency control model (ECM) 121 can generate tasks and/or instructions for the automation and power management systems based on route plan information, sensor data, and operational characteristics of the marine vessel, such as energy consumption information.

The emergency control model (ECM) 121 is arranged to receive route plan information 320 including information like weather forecasts, navigation information for the dedicated route, waypoint information for the dedicated route, emission restricted areas, environmental restrictions and other relevant information. The route plan information 320 may be received from the navigation system of the marine vessel system or the route plan information 320 may be generated by the control apparatus 120. The route plan information 320 may comprise at least one of the following: navigation information for a waypoint or a port; target time or arrival information for the waypoint or the port; electricity information for the port; and environmental information associated to at least one route of the route plan information. The navigation information may comprise at least one of the following: destination information of the dedicated route; remaining travel time of the dedicated route; remaining distance of the dedicated route; navigation information for the dedicated route; waypoint information for the dedicated route; emission restricted area information of the dedicated route; and environmental restriction information of the dedicated route.

Energy consumption information 360 associated to the dedicated route may be determined using the route plan information 320. The energy consumption information 360 relates to predicted energy consumption of at least one of the following: hotel load of the marine vessel, at least one propulsion device of the marine vessel, and automation system of the marine vessel. The hotel load may represent load relating to at least one of lighting, heating, ventilation and fresh water generation during the dedicated voyage. Thus, hotel load may relate to any electrical load caused by all systems on a vehicle (especially a marine vessel) other than propulsion. Energy consumption information 360 may comprise planned energy consumption in relation to different tasks and health status information and availability of the vessel systems during the voyage and used as an input for the emergency control model (ECM) 121.

In case there are constraints in the access to power or a mismatch between production and consumption of energy (consumption exceeds the possible production), the emergency control model (ECM) 121 may generate dynamic change proposals to the route plan information 320 made by the navigation system, for example. The energy consumption information 360 is received by the emergency control model (ECM) 121.

In an embodiment, the emergency control model (ECM) 121 may be configured to automate interaction between navigational route planning and energy route planning. Such operation may include scheduling of energy consumption (use of equipment) and energy generation.

In an embodiment, the control apparatus 120 may be configured to determine a task relating to the route plan information 320 automatically based on the emergency control model (ECM) 121. Thus, the route plan information 320 that is determined for a dedicated route, may be dynamically adjusted automatically using the emergency control model (ECM) 121.

In an embodiment, the control apparatus 120 may be configured to dynamically adjust navigation information of the route plan information. Furthermore, the control apparatus 120 may be configured to dynamically adjust navigation information for the dedicated route, and, for example, dynamically adjusting waypoint information for the dedicated route.

In an embodiment, the control apparatus 120 may be configured to dynamically adjust destination information or remaining travel time of the dedicated route.

The energy consumption information 360 may be configured to be defined using also other input information than only the route plan information 320. For example, characteristics information 330, environmental information 340 or operator input 380 may be used together with the route plan information 320.

The emergency control model (ECM) 121 is further arranged to receive characteristic information 330 representing at least one operating characteristic of the marine vessel. The operating characteristic information 330 of the marine vessel may comprise at least one of the following: sensor data from at least one sensor operationally arranged to the marine vessel; information on currently active propulsion system; status information of energy generation sub-system; and status information of energy storage sub-system, such as a battery system.

The emergency control model (ECM) 121 may further be arranged to receive environmental information 340 separate or in addition to possible environmental information included in the route plan information 320. The environmental information 340 may represent at least one current environmental characteristic of the marine vessel, such as weather information; wind information; air pressure information; ice information; wave height, frequency or direction information; tidal data; current information; water temperature information; water saline level information; and roll or pitch information.

In an embodiment, the control apparatus 120 is configured to schedule energy consumption or energy generation using a determined task relating the route plan information automatically based on the emergency control model (ECM) 121.

In an embodiment, if there has not been identified any violations of possible constraints, the emergency control model (ECM) 121 may generate at least one task for controlling an automation element of the automation system 350 for energy production, energy consumption or energy storage within the marine vessel automatically based on the emergency control model (ECM) 121 and control the associated automation element of the marine vessel automation system 350 based on the determined task.

In an embodiment, the automation element of the marine vessel automation system 350 is configured to control at least one of the following: power management system of the marine vessel and navigation system of the marine vessel. The automation element may be configured to control, for example, power management system of the marine vessel for at least one of the following: schedule for changing propulsion power source; schedule for changing used fuel; schedule for activating exhaust gas cleaning system (e.g. Sox cleaning system and/or SCR); and schedule for operating HVAC (Heating, Ventilation and Air Conditioning). The automation element may also be configured to control, for example, power management system of the marine vessel for schedule for changing operating modes of combustion engine(s) or other power sources (in so far these operating modes influence efficiency of the power generation, for example).

In an embodiment, a control apparatus 120 processing the emergency control model (ECM) 121 is configured to receive confirmation of the task being performed from an automation element 350 being controlled by the task, and to update the emergency control model (ECM) 121 based on the route plan information, the energy consumption information and the characteristic information in response to the received confirmation.

In an embodiment, if there has not been identified any violations of possible constraints, the emergency control model (ECM) 121 will generate energy voyage plan (EVP) 370 and utilize the energy voyage plan (EVP) 370 for determining control tasks relating to energy production, energy consumption or energy storage within the marine vessel automatically based on the dynamic energy management model.

While cruising and performing transit during the voyage, the emergency control model (ECM) 121 maintains a dynamic and up-to-date situational awareness in relation to the executed route (navigation) and energy route plan and the continued health status from all energy consumers and producers. If the situation changes and a system changes health status, the emergency control model (ECM) 121 may be configured to update the energy voyage plan 370 including tasks and automatically notifying the navigation system to allow the navigation system to modify the route plan information accordingly.

The energy voyage plan 370 information can be provided in a first mode as a schedule made available to the engineers to follow. The engineers may perform the scheduled tasks for the automation system 350 based on the energy voyage plan 370. In a second mode, the energy voyage plan 370 may be embedded in the main display of the engine control room and the power management system, for example. The automation system may be further configured to provide an integrated guidance tool to prompt the operator when a task should take place and by acknowledgement from the operator enable and perform the task and end the task when performed. A third mode allows a fully automated solution, where the operator may only be informed about the energy voyage plan 370 or the tasks determined by the emergency control model (ECM) 121. Optionally, current status of the model and next steps may be informed to the operator but the emergency control model (ECM) 121 is configured to control automation elements automatically. In such embodiment the energy voyage plan 370 may be optional.

It is possible to override the emergency control model (ECM) 121 by changing it to standby mode and allowing a manual operation of the power management and automation systems and the sub-systems. At the third mode, the emergency control model (ECM) 121 can operate autonomously together with the navigation system and all the sub-systems. Instead of notifying the operator, the emergency control model (ECM) 121 may log (e.g. using the energy voyage plan 370) the activities and events and will only request assistance from the mission controller or a human operator in case the emergency control model (ECM) 121 is facing a situation it cannot handle or it is not available for operation.

In an embodiment, the energy voyage plan 370 may also comprise automatic information being sent to port authority system for approaching arrival. The information being sent may relate to, for example, estimate of power and/or energy required while staying at berth. By doing that the harbor authorities can make a better estimate how much electricity they need to buy on the spot market for the vessel about to be docked. The port information system may have a dynamic energy management model of its own that receives inputs from all vessels arriving to the port.

The emergency control model (ECM) 121 is configured to control sub-systems and fuel selection via the automation and power management systems and the emergency control model (ECM) 121 can e.g. automatically negotiate the planned route with the navigation system based on the availability of energy producers and their health status (able to operate 0-100%) and the planned energy consumption in relation to ship operation, time and ship position, for example.

In an embodiment, the emergency control model (ECM) 121 is configured to receive input from an operator (USR) 380 either on-board the vessel or remote at other vessel or ground station, for example. In certain pre-defined operating modes or tasks, it may be required that operator acknowledgement is received from the operator (USR) 380 for the determined task the emergency control model (ECM) 121 before controlling an automation element of the marine vessel based on the determined task in response to the received operator acknowledgement.

In an embodiment, the emergency control model (ECM) 121 may be updated in real-time based on the route plan information 320, the energy consumption information 360 and the characteristic information 330.

In an embodiment, when receiving confirmation from the operator 380 of the task being performed, the emergency control model (ECM) 121 is updated based on the route plan information 320, the energy consumption information 360 and the characteristic information 330 in response to the received confirmation.

In an embodiment, in autonomous vessel operation mode, automatic route planning may be executed to provide the route plan information 320 for a safe and optimized route taking into account planned destination and ETA, up to date chart data from the ECDIS, draft of the vessel, predicted environmental conditions (ocean current, wind and sea state) as well as status information's from the power and propulsion plant. Furthermore, a contingency plan to stop the vessel safely in case of emergency is generated along the route for every leg or even leg segment, for example. The approval mechanisms of the route plan 320 may vary depending on autonomy level in use, authority rule sets and customer specifications. Once the route plan is activated and being executed by the Integrated Navigation / DP System (Trackpilot, Speedpilot, DP), the control system is permanently monitoring and adapting the route execution with regards to track- and schedule keeping) if necessary. Reasons for adaptation can be, for example: new destination and/or new ETA, differences between predicted and real environmental conditions, collision avoidance maneuvers, and unexpected changes in the propulsion / power plant (i.e. unforeseen equipment failure).

In an embodiment, the emergency control model (ECM) 121 is configured to control a system over a mesh network, comprising: a main power supply configured to provide power in a first operating mode; a plurality of light module apparatuses operationally connected to the main power supply, comprising a communication interface for a mesh network; an emergency power supply configured to provide power in a second operating mode; an emergency light module apparatus operationally connected to the emergency power supply, comprising a communication interface for the mesh network; and wherein in the second operating mode, an emergency signal is configured to be received by the emergency light module apparatus over the mesh network, and to control the emergency light module apparatus based on the emergency signal.

The emergency control model (ECM) 121 may be configured to control the emergency light system over a mesh network, via the automation system 350, or directly (not shown in Fig. 3 but see Fig. 4) with the elements involved in the emergency light system.

Fig. 4 shows a schematic drawing of a system 400 according to an example embodiment of the invention.

The system 400 for emergency light control over a mesh network 430, comprises a main power supply 410 configured to provide power in a first operating mode. The main power supply 410 may comprise 230V AC supply, wherein the power may be generated by the power generating system of the marine vessel, such as a generator operationally connected to a fuel-driven engine, for example.

The system 400 further comprises a plurality of light module apparatuses (LMA) 411-413 operationally connected to the main power supply 410, comprising a communication interface (RF) for the mesh network 430. The light module apparatuses (LMA) 411-413 are connected to the main power supply 410 over a main power distribution network 415. The mesh network 430 may be a wireless network configured to operate using at least one of the following protocols: ZigBee and Z-Wave, for example. 5G, WiFi and Bluetooth networks may also be utilized, as well as any other wireless network capable for operating for different embodiment.

Furthermore, the system 400 comprises an emergency power supply 420 configured to provide power in a second operating mode. The emergency power supply 420 may comprise 230V AC supply, wherein the power may be generated by the emergency power generating system of the marine vessel, such as an emergency generator operationally connected to a fuel-driven engine, for example. Alternatively or additionally, the emergency power supply 420 may comprise a UPS system. The uninterruptible power supply or uninterruptible power source (UPS) is an electrical apparatus that provides emergency power to a load when the input power source or mains power fails. A UPS differs from an auxiliary or emergency power system or standby generator in that it will provide near-instantaneous protection from input power interruptions, by supplying energy stored in batteries, supercapacitors, or flywheels. The on-battery run-time of most uninterruptible power sources is relatively short (only a few minutes) but sufficient to start a standby power source or properly shut down the protected equipment. It is a type of continual power system.

The system 400 further comprises at least one emergency light module apparatus (E-LMA) 421 operationally connected to the emergency power supply 420, comprising a communication interface (RF) for the mesh network 430. The emergency light module apparatus (E-LMA) 421 is connected to the emergency power supply 420 over an emergency power distribution network 425.

In an embodiment, the emergency light module apparatus (E-LMA) 421 and the light module apparatus (LMA) 411-413 may be technically similar but just connected to different power sources.

In an embodiment, the light module apparatus (LMA) 411-413 may switch to a second operating mode (emergency mode) in case the emergency power source 420 fails.

In an embodiment, there may be backup connection 426 to enable power from the emergency power source 420 driven to main power source 410 feed and vice versa. The backup connection 426 (open/close/direction) may be controlled by the emergency control model (ECM) 121.

In an embodiment, in the second operating mode, an emergency signal is configured to be received by the emergency light module apparatus (E-LMA) 421 over the mesh network 430, and to control the emergency light module apparatus (E-LMA) based on the emergency signal.

The system 400 may further comprise a switch module apparatus (SMA) 440-441 operationally connected to at least one of the following: the light module apparatus (LMA) 411-413, and the emergency light module apparatus (E-LMA) 421. The switch module apparatus (SMA) 440-441 may comprise a communication interface for the mesh network 430.

The switch module apparatus 440-441 may be battery-powered. The switch module apparatus 440-441 may also comprise a switch operation with a sleep mode while not in use. The switch operation may be implement using a push-button, a turning switch or a dimmer potentiometer, for example. The switch module apparatus 440-441 may also comprise an analogue potentiometer.

In an embodiment, overall control of the system 400 may be operated by an emergency control model (ECM) 121 running at a control apparatus 120, reference is thus made to Fig. 1. No matter the control apparatus 120 is illustrated as independent block in Fig. 4, in practise the control apparatus 120 and emergency control model (ECM) 121 may be comprised by any of the modules 411-413, 421, 440-441.

In an embodiment, light module apparatuses 411-413, 421 of Fig. 4 may be located in different rooms or cabins of the marine vessel. The light module apparatuses 411-413, 421 may also be located on outside areas of the vessel, on boats or on life rafts of the vessel, for example. Same applies to switch module apparatuses 440, 441. Inter-room data transfer can be carried out over the mesh network 430 so that each apparatus of the system 400 is connectable with each other and the control apparatus 120.

A smart marine ecosystem relies on analysis of data generated throughout the marine vessel to ensure efficient and sustainable operation. In practical terms one of the struggles is to generate and transmit the data without installing an excessive infrastructure. Lighting installation is typically everywhere around the marine vessel and that could be used for data carrier purposes for marine vessel operational data as well as enabling environmental data generation enabling more efficient analysis of vessel status.

In an embodiment, a plurality of lighting apparatuses 411-413, 421, 440-441 comprise a wireless communication interface (RF) configured to operate within the mesh network 430.

These interfaces are building up a mesh network so that information can be passed from interface to interface until desired receiver(s) is reached within the network. Logically one type of information is the lighting control itself (switching, dimming, monitoring etc.). The switch module apparatus 440, 441 may be configured to control at least one of the following: light switching of at least one light module apparatus 411-413; light dimming of at least one light module apparatus 411-413; and triggering the second operating mode.

In an embodiment, triggering the second operating mode comprises transmission of the emergency signal for the emergency light module apparatus 421 over the mesh network 430.

In an embodiment, to optimize vessel operation, environmental data within/around the marine vessel can be generated by the lighting installation. Sensor device(s) (S) arranged in, or attached to, apparatuses 411-413, 421, 440-441, 450 may comprise sensors for measuring environmental information, e.g. light intensity, temperature or humidity around the apparatus. Based on the measured data it is possible to generate a heat map or a humidity map of the marine vessel, for example.

In an embodiment, the environmental information is configured to be transmitted over the mesh network to a marine vessel control system.

Sensor data may be used for efficient HVAC (air conditioning / heating) operation, for example. Furthermore, runtime counter information may be generated, daylight information may be determined, door switch status may be defined for further analysis and optimization. Data analysis may be used for lighting quality, lifetime calculations, and predictive maintenance of the marine vessel, for example.

In an embodiment, an external apparatus (EXA) 450 can be monitored within the system 400 and at least one of the lighting apparatuses 413 is configured to be used as a connection point for the external apparatus 450 related data to operate as data transceiver for carrying data over the mesh network 430. Such external apparatus 450 related data may comprise, for example, power consumption information or runtime information of field equipment, e.g. freezers in cabins, TV's etc. Furthermore, specific data of field installations, e.g. electrical re-heater in HVAC may be received and transceived.

In an embodiment, at least one of the apparatuses may be configured to operate as self-powered apparatus 451 and be completely independent from electrical installation. A wireless sensor module of the self-powered apparatus may use energy harvesting to generate the electrical power needed for operation. This self-powered apparatus could be placed everywhere in a vessel generating data wherever the operator or the vessel so desires. For example, pipe temperature, throughput, vibration etc. can be measured and transceived. Local lighting installation may be used as a receiver and carrier of the data.

In an embodiment, a light module apparatus 421 is configured to receive power from an emergency power supply 420 in a second operating mode, and comprises a lighting device (L), a communication interface (RF) for a mesh network 430, at least one processor (CTRL), and at least one memory including computer program code (not shown in Fig. 4), wherein the at least one memory and the computer program code configured to, with the at least one processor, cause the apparatus 421 to receive an emergency signal over the mesh network 430, and control the lighting device (L) based on the emergency signal.

In an embodiment, the light module apparatus 421 is further configured to, with the at least one processor, cause the apparatus to switch to higher or full lighting intensity. The apparatus 421 may be further configured to, with the at least one processor, cause the apparatus 421 to ignore other switching requests until the main power supply 410 returns to provide power in a first operating mode.

For example, in case of black out of the main line supply 410, all effected lights 411-413, 440-441, 450-451 may send out an emergency signal causing all lights on using emergency supply 420 to switch to higher or 100% lighting intensity. Furthermore, the light module apparatus may be configured to ignore all other switching requests. This mode may remain active until the main supply 410 returns. Thus, no cabled installation is needed but such emergency control model and function on board can be implemented in a wireless way. The emergency light itself is typically a requirement from classification societies, as such.

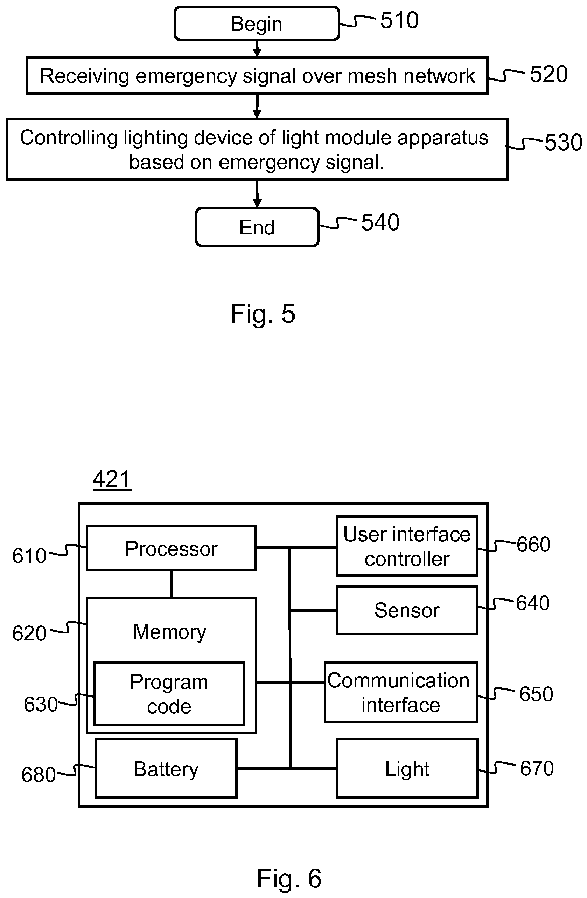

In an embodiment, a light module apparatus 411-413 may be configured to transmit an emergency signal over the mesh network 430 using the backup power source (e.g. battery 680 of Fig. 6), wherein the emergency signal is configured to control a second lighting apparatus 421.

In an embodiment, the light module apparatus 411-413 may detect change of mode from the first operating mode to a second operating mode; and transmit an emergency signal over the mesh network using the backup power source, wherein the emergency signal is configured to control a second light module apparatus 421.

In some embodiments, the backup power source may also be used to power the light of the apparatus.

Fig. 5 shows a flow chart of a process according to an example embodiment of the invention.

A computer implemented method starts in step 510. The computer implemented method is configured for controlling a light module apparatus in a system that comprises a main power supply configured to provide power in a first operating mode, and a plurality of light modules operationally connected to the main power supply, the light modules comprising a communication interface for a mesh network. The system further comprises an emergency power supply configured to provide power in a second operating mode, at least one emergency light module operationally connected to the emergency power supply, the light module comprising a communication interface for the mesh network, and configured to receive power from the emergency power supply in the second operating mode. In step 520, an emergency signal is received over the mesh network. In step 530, a lighting device or light module of the light module apparatus is controlled based on the emergency signal. In step 540, the method ends.

Fig. 6 presents an example block diagram of a light module apparatus 421 in which various embodiments of the invention may be applied. The apparatus 421 is configured to receive control messages over mesh network and operate accordingly in a system for emergency light control. Similar block diagram may apply to other light module apparatuses 411-413 since the apparatuses 411-413, 421 may be technically similar but merely connected to different power source 410, 420.

The general structure of the light module apparatus 421 comprises a communication interface 650, a processor 610, and a memory 620 coupled to the processor 610. The light module apparatus 421 further comprises software 630 stored in the memory 620 and operable to be loaded into and executed in the processor 610, and a lighting device 670. The software 630 may comprise one or more software modules and can be in the form of a computer program product, such as the emergency control model (ECM) 121 of Fig. 1. The light module apparatus 421 may further comprise a user interface controller 660 and a sensor device 640.

The processor 610 may be, e.g., a central processing unit (CPU), a microprocessor, a digital signal processor (DSP), a graphics processing unit, or the like. Fig. 6 shows one processor 610, but the apparatus 421 may comprise a plurality of processors.

The memory 620 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 421 may comprise a plurality of memories. The memory 620 may be constructed as a part of the apparatus 421 or it may be inserted into a slot, port, or the like of the apparatus 421 by a user. The memory 620 may serve the sole purpose of storing data, or it may be constructed as a part of an apparatus serving other purposes, such as processing data. A proprietary application 630, such as computer program code for the emergency control model (ECM) 121, voyage related data, vessel related data, seawater data, sensor data or environmental data may be stored to the memory 620.

In an embodiment, the apparatus 421 is configured to perform a computer implemented method for controlling a light module apparatus in a system comprising a main power supply, a plurality of light modules, an emergency power supply, at least one emergency light module, the method comprising: receiving an emergency signal over the mesh network; and controlling a lighting device of the light module apparatus based on the emergency signal.

The user interface controller 660 may comprise circuitry for receiving input from a user of the control apparatus 421 (an operator), e.g., via a keyboard, graphical user interface shown on the user interface 240 of the apparatus 421, speech recognition circuitry, or an accessory device, such as a headset, and for providing output to the user via, e.g., a graphical user interface or a loudspeaker. The user interface controller 660 is optional and not necessarily implemented at all.

The communication interface module 650 implements at least part of data transmission. The communication interface module 650 may comprise, e.g., a wireless module. The wireless interface may comprise such as a WLAN, Bluetooth, infrared (IR), radio frequency identification (RF ID), GSM/GPRS, CDMA, WCDMA, LTE (Long Term Evolution) or 5G radio module. The communication interface module 650 may be integrated into the apparatus 421, or into an adapter, card or the like that may be inserted into a suitable slot or port of the apparatus 421. The communication interface module 650 may support one radio interface technology or a plurality of technologies. The apparatus 421 may comprise a plurality of communication interface modules 650.

A skilled person appreciates that in addition to the elements shown in Fig. 6, the light module apparatus 421 may comprise other elements, such as microphones, extra displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the apparatus 421 may comprise a disposable or rechargeable battery 680 for powering if external power supply is not available.

In an embodiment, the apparatus 421 comprises speech recognition means. Using these means, a pre-defined phrase may be recognized from the speech and translated into control information for the apparatus 421, for example.

Without in any way limiting the scope, interpretation, or application of the claims appearing below, a technical effect of one or more of the example embodiments disclosed herein is improved method and apparatus for controlling emergency light system.

Another technical effect of one or more of the example embodiments disclosed herein is that the wireless mesh network based system enables more reliable and accurate system.

Still another technical effect of one or more of the example embodiments disclosed herein is that the wireless emergency light module system is more flexible for different installations and vessels.

Still another technical effect of one or more of the example embodiments disclosed herein is that the wireless emergency light control system is more cost-efficient.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications, which may be made without departing from the scope of the present invention as defined in the appended claims.

## Claims

1. A system (400) for emergency light control over a mesh network (430), wherein the system (400) is configured to provide an emergency light system of a marine vessel (105), the system comprising:
a main power supply (410) configured to provide power in a first operating mode;
a plurality of light module apparatuses (411-413) operationally connected to the main power supply (410), the plurality of light module apparatuses (411-413) comprising a communication interface (RF) for a mesh network (430) and a backup power source;
at least one emergency light module apparatus (421) comprising a communication interface (RF, 650) for the mesh network (430); and
wherein the plurality of light module apparatuses (411-413) is configured
to detect change of mode from the first operating mode to a second operating mode; and
to transmit an emergency signal over the mesh network (430) using the backup power source,
wherein in the second operating mode, the emergency signal is configured to be received by the at least one emergency light module apparatus (421) over the mesh network (430), and to control the at least one emergency light module apparatus (421) based on the emergency signal,
**characterized in that** the system (400) comprises
an emergency power supply (420) configured to provide power in the second operating mode; and **in that** the at least one emergency light module apparatus (421) is operationally connected to the emergency power supply (420) over an emergency power distribution network (425) and configured to receive power from the emergency power supply (420) in the second operating mode over the emergency power distribution network (425).

2. The system (400) of claim 1, wherein the emergency light module apparatus (421) comprises a sensor device (S, 640) configured to determine environmental information around the emergency light module apparatus (421).

3. The system of any preceding claim, wherein the light module apparatus (411-413) comprises a sensor device (S) configured to determine environmental information around the light module apparatus (411-413).

4. The system (400) of any preceding claim 2 or 3, wherein the sensor device (S, 640) is configured to provide information related to at least one of the following:
light intensity;
temperature; and
humidity.

5. The system (400) of any preceding claim 2 to 4, wherein the environmental information is configured to be transmitted over the mesh network (430) to a marine vessel control system.

6. The system (400) of any preceding claim, further comprising:
a switch module apparatus (440, 441) operationally connected to at least one of the following:
a light module apparatus (411-413); and
an emergency light module apparatus (421).

7. The system (400) of claim 6, wherein the switch module apparatus (440, 441) comprising communication interface (RF) for the mesh network (430).

8. The system (400) of claim 7, wherein the switch module apparatus (440, 441) is configured to control at least one of the following:
light switching of at least one light module apparatus (411-413);
light dimming of at least one light module apparatus (411-413); and
triggering the second operating mode.

9. The system (400) of claim 8, wherein the triggering the second operating mode comprises transmission of the emergency signal for the emergency light module apparatus (421) over the mesh network (430).

10. The system (400) of any preceding claim 1 to 9, wherein the emergency light module apparatus (421) comprises a disposable or rechargeable battery for powering the emergency light module apparatus (421) if the emergency power supply (420) is not available.

11. The system (400) of any preceding claim 6 to 10, wherein the switch module apparatus (440, 441) comprises a switch operation with a sleep mode while not in use.

12. An emergency light module apparatus (421) comprising:
a lighting device (L, 670);
a communication interface (RF, 650) for a mesh network (430);
at least one processor (610); and
at least one memory (620) including computer program code (630);
the at least one memory (620) and the computer program code (630) configured to, with the at least one processor (610), cause the apparatus to:
receive an emergency signal over the mesh network (430) from at least one of a plurality of light module apparatuses (411-413); and
control the lighting device (L, 670) based on the emergency signal,
**characterized in that** the emergency light module is operationally connected to an emergency power supply (420) over an emergency power distribution network and **characterized in that** the emergency light module apparatus (421) is configured to receive power from the emergency power supply (420) over the emergency power distribution network (425).

13. The emergency light module apparatus (421) of claim 12, wherein the at least one memory (620) and the computer program code (630) are further configured to, with the at least one processor (610), cause the apparatus to:
switch to higher lighting intensity.

14. The emergency light module apparatus (421) of claim 12 or 13, wherein the at least one memory (620) and the computer program code (630) are further configured to, with the at least one processor (610), cause the apparatus to:
ignore other switching requests until the main power supply (410) returns to provide power in a first operating mode.

15. A computer implemented method for controlling at least one emergency light module apparatus (421) in a system (400) comprising a main power supply (410) configured to provide power in a first operating mode, a plurality of light module apparatuses (411-413) operationally connected to the main power supply (410), an emergency power supply (420) configured to provide power in a second operating mode, at least one emergency light module apparatus (421), the method comprising:
receiving (520) an emergency signal over a mesh network (430) from at least one of the plurality of light module apparatuses (411-413) upon detection, by said at least one of the plurality of light module apparatuses (411-413), of a change of mode from the first operating mode to a second operating mode;
controlling (530) a lighting device (L, 670) of the at least one emergency light module apparatus (421) based on the emergency signal,
**characterized in that** the at least one emergency light module apparatus (421) is operationally connected to the emergency power supply (420) and configured to receive power from the emergency power supply (420) in the second operating mode over an emergency power distribution network (425).

## Patentansprüche

1. System (400) zur Notlichtsteuerung über ein Maschennetz (430), wobei das System (400) dazu ausgelegt ist, ein Notlichtsystem eines Wasserfahrzeugs (105) bereitzustellen, wobei das System umfasst:
eine Hauptstromversorgung (410), die dazu ausgelegt ist, Leistung in einer ersten Betriebsart bereitzustellen;
eine Mehrzahl von Lichtmodulvorrichtungen (411-413), die mit der Hauptstromversorgung (410) betriebswirksam verbunden sind, wobei die mehreren Lichtmodulvorrichtungen (411-413) eine Kommunikationsschnittstelle (RF) für ein Maschennetz (430) und eine Reservestromquelle umfassen;
wobei mindestens eine Notlichtmodulvorrichtung (421) eine Kommunikationsschnittstelle (RF, 650) für das Maschennetz (430) umfasst; und
wobei die mehreren Lichtmodulvorrichtungen (411-413) dazu ausgelegt sind,
einen Betriebsartenwechsel von einer ersten Betriebsart in eine zweite Betriebsart zu erkennen; und
mit Hilfe der Reservestromquelle ein Notsignal über das Maschennetz (430) zu senden,
wobei in der zweiten Betriebsart das Notsignal dazu ausgelegt ist, von der mindestens einen Notlichtmodulvorrichtung (421) über das Maschennetz (430) empfangen zu werden, und die mindestens eine Notlichtmodulvorrichtung (421) auf Grundlage des Notsignals zu steuern,
**gekennzeichnet dadurch, dass** das System (400) umfasst:
eine Notstromversorgung (420), die dazu ausgelegt ist, Leistung in einer zweiten Betriebsart bereitzustellen; und **dadurch, dass** die mindestens eine Notlichtmodulvorrichtung (421) mit der Notstromversorgung (420) über ein Notstromverteilungsnetz (425) betriebswirksam verbunden ist und dazu ausgelegt ist, Leistung von der Notstromversorgung (420) in der zweiten Betriebsart über das Notstromverteilungsnetz (425) zu empfangen.

2. System (400) nach Anspruch 1, wobei die Notlichtmodulvorrichtung (421) eine Sensorvorrichtung (S, 640) umfasst, die dazu ausgelegt ist, Umgebungsinformationen im Umfeld der Notlichtmodulvorrichtung (421) zu bestimmen.

3. System nach einem vorhergehenden Anspruch, wobei die Lichtmodulvorrichtung (411-413) eine Sensorvorrichtung (S) umfasst, die dazu ausgelegt ist, Umgebungsinformationen im Umfeld der Lichtmodulvorrichtung (411-413) zu bestimmen.

4. System (400) nach einem vorhergehenden Anspruch 2 oder 3, wobei die Sensorvorrichtung (S, 640) dazu ausgelegt ist, Informationen in Bezug auf mindestens eines von Folgendem bereitzustellen:
Lichtintensität;
Temperatur; und
Feuchtigkeit.

5. System (400) nach einem vorhergehenden Anspruch 2 bis 4, wobei die Umgebungsinformationen dazu ausgelegt sind, über das Maschennetz (430) an ein Wasserfahrzeugsteuersystem gesendet zu werden.

6. System (400) nach einem vorhergehenden Anspruch, ferner umfassend:
eine Schaltermodulvorrichtung (440, 441), die mit mindestens einem von Folgendem betriebswirksam verbunden ist:
einer Lichtmodulvorrichtung (411-413); und
einer Notlichtmodulvorrichtung (421).

7. System (400) nach Anspruch 6, wobei die Schaltermodulvorrichtung (440, 441) eine Kommunikationsschnittstelle (RF) für das Maschennetz (430) umfasst.

8. System (400) nach Anspruch 7, wobei die Schaltermodulvorrichtung (440, 441) dazu ausgelegt ist, mindestens eines von Folgendem zu steuern:
Lichtschaltung mindestens einer Lichtmodulvorrichtung (411-413);
Lichtdimmung mindestens einer Lichtmodulvorrichtung (411-413); und
Auslösung der zweiten Betriebsart.

9. System (400) nach Anspruch 8, wobei die Auslösung der zweiten Betriebsart das Senden des Notsignals für die Notlichtmodulvorrichtung (421) über das Maschennetz (430) umfasst.

10. System (400) nach einem vorhergehenden Anspruch 1 bis 9, wobei die Notlichtmodulvorrichtung (421) eine Einwegbatterie oder wiederaufladbare Batterie für die Energieversorgung der Notlichtmodulvorrichtung (421) umfasst, falls die Notstromversorgung (420) nicht verfügbar ist.

11. System (400) nach einem vorhergehenden Anspruch 6 bis 10, wobei die Schaltermodulvorrichtung (440, 441) einen Schaltbetrieb mit Schlafmodus während der Nichtverwendung umfasst.

12. Notlichtmodulvorrichtung (421) umfassend:
eine Beleuchtungsvorrichtung (L, 670);
eine Kommunikationsschnittstelle (RF, 650) für ein Maschennetz (430);
mindestens einen Prozessor (610); und
mindestens einen Speicher (620), der einen Computerprogrammcode (630) umfasst;
wobei der mindestens eine Speicher (620) und der Computerprogrammcode (630) dazu ausgelegt sind, mit dem mindestens einen Prozessor (610) die Vorrichtung dazu zu veranlassen,
über das Maschennetz (430) ein Notsignal von mindestens einer der mehreren Lichtmodulvorrichtungen (411-413) zu empfangen; und
die Beleuchtungsvorrichtung (L, 670) auf Grundlage des Notsignals zu steuern,
**gekennzeichnet dadurch, dass**
das Notlichtmodul über ein Notstromverteilungsnetz mit einer Notstromversorgung (420) betriebswirksam verbunden ist, und **gekennzeichnet dadurch, dass** die Notlichtmodulvorrichtung (421) dazu ausgelegt ist, Leistung von der Notstromversorgung (420) über das Notstromverteilungsnetz (425) zu empfangen.

13. Notlichtmodulvorrichtung (421) nach Anspruch 12, wobei der mindestens eine Speicher (620) und der Computerprogrammcode (630) ferner dazu ausgelegt sind, mit dem mindestens einen Prozessor (610) die Vorrichtung dazu zu veranlassen,
auf eine höhere Lichtintensität umzuschalten.

14. Notlichtmodulvorrichtung (421) nach Anspruch 12 oder 13, wobei der mindestens eine Speicher (620) und der Computerprogrammcode (630) ferner dazu ausgelegt sind, mit dem mindestens einen Prozessor (610) die Vorrichtung dazu zu veranlassen,
andere Schaltanforderungen zu ignorieren, bis die Hauptstromversorgung (410) zur Bereitstellung von Leistung in einer ersten Betriebsart zurückkehrt.

15. Computer-implementiertes Verfahren zur Steuerung mindestens einer Notlichtmodulvorrichtung (421) in einem System (400) umfassend eine Hauptstromversorgung (410), die dazu ausgelegt ist, Leistung in einer ersten Betriebsart bereitzustellen, eine Mehrzahl von Lichtmodulvorrichtungen (411-413), die mit der Hauptstromversorgung (410) betriebswirksam verbunden sind, eine Notstromversorgung (420), die dazu ausgelegt ist, Leistung in einer zweiten Betriebsart bereitzustellen, mindestens eine Notlichtmodulvorrichtung (421), wobei das Verfahren umfasst:
Empfangen (520) eines Notsignals über ein Maschennetz (430) aus mindestens einer der mehreren Lichtmodulvorrichtungen (411-413), wenn von der einen der mehreren Lichtmodulvorrichtungen (411-413) ein Betriebsartenwechsel von der ersten Betriebsart zu einer zweiten Betriebsart erkannt wird;
Steuern (530) einer Beleuchtungsvorrichtung (L, 670) der mindestens einen Notlichtmodulvorrichtung (421) auf Grundlage des Notsignals,
**gekennzeichnet dadurch, dass**
die mindestens eine Notlichtmodulvorrichtung (421) mit der Notstromversorgung (420) betriebswirksam verbunden ist und dazu ausgelegt ist, Leistung von der Notstromversorgung (420) in der zweiten Betriebsart über ein Notstromverteilungsnetz (425) zu empfangen.

## Revendications

1. Système (400) pour la commande d'éclairage de secours à travers un réseau maillé (430), dans lequel le système (400) est configuré pour fournir un système d'éclairage de secours d'un navire marin (105), ledit système comprenant :
une alimentation électrique principale (410) configurée pour fournir une puissance dans un premier mode de fonctionnement;
une pluralité d'appareils modules d'éclairage (411-413) opérationnellement connectés à l'alimentation électrique principale (410), ladite pluralité d'appareils modules d'éclairage (411-413) comprenant une interface de communication (RF) pour un réseau maillée (430) et une source électrique de réserve;
au moins un appareil module d'éclairage de secours (421) comprenant une interface de communication (RF, 650) pour le réseau maillé (430); et
dans lequel la pluralité d'appareils modules d'éclairage (411-413) est configurée
pour détecter un changement de mode passant du premier mode de fonctionnement à un second mode de fonctionnement; et
pour transmettre un signal de secours à travers le réseau maillée (430) à l'aide de la
source électrique de réserve,
dans lequel, dans le deuxième mode de fonctionnement, le signal de secours est configuré pour être reçu par ledit au moins un appareil module d'éclairage de secours (421) à travers le réseau maillée (430), et pour commander ledit au moins un appareil module d'éclairage de secours (421) sur la base du signal de secours,
**caractérisé en ce que** le système (400) comprend
une alimentation électrique de secours (420) configurée pour fournir une puissance dans un deuxième mode de fonctionnement; et **en ce que** ledit au moins un appareil module d'éclairage de secours (421) est opérationnellement connecté à l'alimentation électrique de secours (420) à travers un réseau de distribution électrique de secours (425) et configuré pour recevoir une puissance venant de l'alimentation électrique de secours (420) dans le deuxième mode de fonctionnement à travers le réseau de distribution électrique de secours (425).

2. Système (400) selon la revendication 1, dans lequel l'appareil module d'éclairage de secours (421) comprend un dispositif de capteur (S, 640) configuré pour déterminer des informations environnementales autour de l'appareil module d'éclairage de secours (421).

3. Système selon une revendication précédente quelconque, dans lequel l'appareil module d'éclairage (411-413) comprend un dispositif de capteur (S) configuré pour déterminer des informations environnementales autour de l'appareil module d'éclairage (411-413).

4. Système (400) selon l'une des revendications précédentes 2 ou 3, dans lequel le dispositif de capteur (S, 640) est configuré pour fournir des informations relatives à au moins l'un parmi ce qui suit :
intensité lumineuse;
température; et
humidité.

5. Système (400) selon l'une des revendications précédentes 2 à 4, dans lequel les informations environnementales sont configurées pour être transmises à travers le réseau maillé (430) à un système de commande de navire marin.

6. Système (400) selon une revendication précédente quelconque, comprenant également :
un appareil module de commutation (440, 441) connecté opérationnellement à au moins l'un parmi ce qui suit :
un appareil module d'éclairage (411-413); et
un appareil module d'éclairage de secours (421).

7. Système (400) selon la revendication 6, dans lequel l'appareil module de commutation (440, 441) comprend une interface de communication (RF) pour le réseau maillé (430).

8. Système (400) selon la revendication 7, dans lequel l'appareil module de commutation (440, 441) est configuré pour commander au moins l'un parmi ce qui suit :
la commutation de la lumière d'au moins un appareil module d'éclairage (411-413);
la gradation de la lumière d'au moins un appareil module d'éclairage (411-413); et
le déclenchement du deuxième mode de fonctionnement.

9. Système (400) selon la revendication 8, dans lequel le déclenchement du deuxième mode de fonctionnement comprend la transmission d'un signal de secours pour l'appareil module d'éclairage de secours (421) à travers le réseau maillée (430).

10. Système (400) selon l'une des revendications précédentes 1 à 9, dans lequel l'appareil module d'éclairage de secours (421) comprend une batterie jetable ou rechargeable pour l'alimentation électrique de l'appareil module d'éclairage de secours (421) si l'alimentation électrique de secours (420) n'est pas disponible.

11. Système (400) selon l'une des revendications précédentes 6 à 10, dans lequel l'appareil module de commutation (440, 441) comprend un régime de commutation avec un mode veille pendant non-utilisation.

12. Appareil module d'éclairage de secours (421) comprenant :
un dispositif d'éclairage (L, 670);
une interface de communication (RF, 650) pour un réseau maillé (430);
au moins un processeur (610); et
au moins une mémoire (620) comportant un code de programme informatique (630);
ladite au moins une mémoire (620) et ledit code de programme informatique (630) étant configurés pour amener l'appareil, avec ledit au moins un processeur (610), à
recevoir à travers le réseau maillé (430) un signal de secours venant d'au moins l'un de la pluralité d'appareils modules d'éclairage (411-413); et
commander le dispositif d'éclairage (670) sur la base du signal de secours,
**caractérisé en ce que**
le module d'éclairage de secours est opérationnellement connecté à une alimentation électrique de secours (420) à travers un réseau de distribution électrique de secours et **caractérisé en ce que** l'appareil module d'éclairage de secours (421) est configuré pour recevoir une puissance venant de l'alimentation électrique de secours (420) à travers le réseau de distribution électrique de secours (425).

13. Appareil module d'éclairage de secours (421) selon la revendication 12, dans lequel ladite au moins une mémoire (620) et ledit code de programme informatique (630) sont également configurés pour amener l'appareil, avec ledit au moins un processeur (610), à :
passer à une intensité lumineuse plus élevée.

14. Appareil module d'éclairage de secours (421) selon la revendication 12 ou 13, dans lequel ladite au moins une mémoire (620) et ledit code de programme informatique (630) sont également configurés pour amener l'appareil, avec ledit au moins un processeur (610), à :
ignorer d'autres demandes de commutation jusqu'à ce que l'alimentation électrique principale (410) recommence à fournir une puissance dans un premier mode de fonctionnement.

15. Procédé mis en oeuvre par ordinateur pour commander au moins un appareil module d'éclairage de secours (421) dans un système (400) comprenant une alimentation électrique principale (410) configurée pour fournir une puissance dans un premier mode de fonctionnement, une pluralité d'appareils modules d'éclairage (411-413) opérationnellement connectés à l'alimentation électrique principale (410), une alimentation électrique de secours (420) configurée pour fournir une puissance dans un deuxième mode de fonctionnement, au moins un appareil module d'éclairage de secours (421), ledit procédé comprenant les étapes consistant à :
recevoir (520) à travers un réseau maillé (430) un signal de secours venant d'au moins l'un de la pluralité d'appareils modules d'éclairage (411-413) lorsque ledit au moins l'un de la pluralité d'appareils modules d'éclairage (411-413) détecte un changement de mode passant du premier mode de fonctionnement à un deuxième mode de fonctionnement;
commander (530) un dispositif d'éclairage (L, 670) dudit au moins un appareil module d'éclairage de secours (421) sur la base du signal de secours,
**caractérisé en ce que**
ledit au moins un appareil module d'éclairage de secours (421) est opérationnellement connecté à l'alimentation électrique de secours (420) et configuré pour recevoir une puissance venant de l'alimentation électrique de secours (420) dans le deuxième mode de fonctionnement à travers un réseau de distribution électrique de secours (425).
